# EUROPEAN PATENT SPECIFICATION

(11) **EP 4 097 842 B1**
(45) Date of publication and mention of the grant of the patent: **30.10.2024**
(21) Application number: 21702904.0
(22) Date of filing: 27.01.2021
(51) Int. Cl.: H02S 20/00, H02S 30/10, B63B 35/44, F24S 20/70

(54) **FLOATING SOLAR SUPPORT MODULE**
SCHWIMMENDES SOLARTRÄGERMODUL
MODULE DE SUPPORT SOLAIRE FLOTTANT

(30) Priority: 27.01.2020 NO 20200103
(43) Date of publication of application: 07.12.2022
(73) Proprietor: CSUB AS, 4836 Arendal (NO)
(72) Inventor: BRATTEKÅS, Jon Inge, 4844 Arendal (NO); BRATTEKÅS, Christian, 4841 Arendal (NO); NORDBY, Helge, 4846 Arendal (NO); SEMB, Gunnar, 4817 His (NO); HANSSEN, Erik Byholt, 4818 Færvik (NO)
(74) Representative: Bryn Aarflot AS
(86) International application number: PCT/EP2021/051856
(87) International publication number: WO 2021/151940

(56) References cited:
- EP-A1- 2 299 499
- WO-A1-2012/076007
- YOUNG-GEUN LEE; HYUNG-JOONG JOO; SOON-JONG YOON: "Design and installation of floating type photovoltaic energy generation system using FRP members", SOLAR ENERGY, vol. 108, 1 October 2014 (2014-10-01), pages 13 - 27, XP009527196

## Description

### Technical Field

The present invention relates to a support for a solar system. More particular the invention relates to a modular support for solar panels floating on the water surface. The invention also relates to a method for assembling the floating solar support module at site and a solar plant assembled from a number of floating solar support modules.

### Background Art and object of the invention

Solar power will be an important energy source in the future.

Today about 25% of the world power production comes from renewable energy sources. In the future, worldwide energy demand is expected to grow substantially, and this energy will mainly be covered by renewable energy, like solar and wind power.

The predictions, together with the decrease of fossil fuel as an energy source, have stimulated a rapid growth in the development of renewable energy.

Wind farms, hydroelectric power plants, thermal power stations, and solar power plants all traditionally need a certain area of land, which is costly and can negatively affect the environment The development of solar plants that are installed at the water surface, in lakes, ponds, reservoirs or other suitable sea or water surface is beneficial in that it reduces the need for land area. It is also beneficial in that the water provides a cooling of the solar plant. This results in an increased efficiency of the solar cells and thus an overall increased efficiency of the plant.

WO2019/122712 discloses a modular assembly for a floating solar power plant. The module comprises a molded construction which makes up the floating element. Each molded construction is filled with air to achieve the required buoyancy and the module is adapted to receive one single solar panel. Several modules may then be connected together to form an interconnected plant. The molded construction module has a design that is disadvantageous when exposed to wave movements from the water. A large portion of the plant according to the WO-publication will rest against the water surface. When the construction is moved by a wave, this movement will be transmitted to the whole connected plant and the plant will be subjected to excessive movement. There is also a need for a large volume to transport the modules to the site before installation.

WO2012076007 relates to a floating frame for mounting at least one solar collector. The frame comprises two spaced apart floating elements and multiple bows extending between two spaced apart floats. Each bows are in the ends bent around the floating elements. The publication is designed for areas that are protected from wind and waves as the frame has a fragile structure that would not withstand large waves etc. The publication further fails to disclose an easy assembly of the individual modules and several modules put together. CN110277954, CN10904748, US2008029148 shows technical background to the invention.

The non-patent literature document *"*Design and installation of floating type photovoltaic energy generation system using FRP members", Young-Geun Lee, vol. 108, 1 October 2014 (2014-10-01), pages 13-27, discloses a floating solar power plant support module comprising a structural system supporting PV panels, said structural system being fixed on two elongate buoyancy elements.

Document EP 2 299 499 A1 discloses a floating solar power plant support module that comprises two elongate buoyancy elements, said two elongate buoyancy elements being parallelly arranged. Two beam elements are connected to the elongate buoyancy elements, said two beam elements being perpendicularly arranged with respect to the buoyancy elements. Elongate rib elements are attached to the beam elements. A first bracket and a second bracket are fixed on the beam elements and applied over the buoyancy elements.

The present invention has the following advantages over the prior art:
- The invention is based on separate elements which provides low volume and low weight when transported. This makes it easier to transport the solar plant since the elements are able to be transported in parts by a small or compact transport carrier to the site, instead of the whole support module.
- Such installations are often performed in areas without any access to cranes and other advanced lifting appliances. The low weight of the elements thus provides a simple, assembly adapted to be handled manually by hand.
- The invention further provides a high degree of flexibility with respect to the size of the panels, number of panels and the angle of the solar panels in the installation. The angle of the solar panels is important as the solar panels are tilted and adjusted towards an optimal angle of irradiance from the sun.

- The assembled solar support module comprises several solar panels. Several solar support modules can be connected to form a large solar plant. The assembly of the modules provides an easy adaptable and flexible solar plant.

- The invention further provides a stable device. Stability is important for maintenance purposes, but more importantly, stability maintain the correct angle to optimize solar energy output for the plant.
- Stability also enhances the resistance towards environmental forces (wind, waves) since the unit has a larger area/footprint. This means that the invention may be arranged in harsh environment and may withstand the forces acting on the structure. The arrangement of the different parts of the structure also facilities the robustness of the invention.
- The module of the invention is further designed to provide a volume or a separate space underneath the module. This results in less movement of the construction which again provides less fatigue and increased operating time.

Further and other advantages will be apparent in the following description of the invention.

### Summary of invention

The invention relates to a floating solar power plant support module comprising at least two elongate buoyancy elements, said the at least two buoyancy elements being substantially parallelly arranged, at least two beam elements connected to the elongate buoyancy elements, said the at least two beam elements being substantially perpendicularly arranged with respect to the elongate buoyancy elements, said the at least two beam elements having each a lifted or vertex portion arising from an angled portion of the beam situated between two adjacent buoyancy elements in order to reduce movement caused by waves when installed at the water surface.

The at least two beam elements being respectively formed as a U-shaped beam element with flanges, said respective beam elements having at least two second recesses adapted to respectively receive at least a portion of the buoyancy element, and at least two first recesses, said first and second recesses are formed in the surface of the flanges,
the solar support module further comprises at least two elongate rib elements arranged respectively in the first recesses of the at least two beam elements, said the at least two rib elements being substantially perpendicularly arranged with respect to the at least two beam elements. The first recesses and the second recesses are arranged in opposite flanges of the U-shaped beam elements.

Preferably, each point of the flanges extending in a direction parallelly arranged to a plane extending through the centre of the buoyancy elements.

Preferably, respectively the at least two elongate buoyancy elements, the at least two beam elements and at least two elongate rib elements, respectively being arranged spaced apart.

Preferably, said angled portion comprising a first beam portion and a second beam portion, said first and second beam portion having each an angled distance from a horizontal plane extending through the center of the buoyancy elements.

Preferably, the angled distance of said first and second beam portion being equal or the angled distance of the first beam portion being different from the angled distance of the second beam portion.

Preferably, the angled distance is between 10-45°.

Preferably, the support module having a plurality of rib elements distributed separately in the first recesses throughout the length of the respective beam elements.

Preferably, the second recesses in the beam element being semi-circular to mate with a circular buoyance element.

Preferably, the support module further comprises a bracket for securing the buoyancy element to the beam element.

Preferably, the solar support module further comprises a spacer and fastening mechanism for securing a solar panel to the solar support module.

Preferably, each beam element comprises end stoppers arranged at non-elevated portions of the beam element in order to facilitate the positioning of the panel.

The invention further relates to a floating solar power plant comprising a plurality of interconnected floating solar power plant support modules.

One of the at least two buoyancy elements of two adjacent support modules is a common buoyancy element connected to the beam elements from the adjacently arranged solar power plant support modules.

Preferably the floating solar plant further comprises a walkway separating two adjacent solar support modules.

The invention further relates to a method for assembling a floating solar power plant and/or the modules of the solar power plant at a remote location where the floating solar power plant is to be installed or used, comprising the following steps;
transporting the individual elements separately to the remote location, connecting the at least two beam elements and the at least two elongate buoyancy elements perpendicularly together to form a frame, by arranging the buoyancy element in the second recess of the beam element and securing the buoyance element to the beam element,
securing at least two ribs substantially perpendicularly at the first recesses of the beam elements.

Preferably, the method comprises a fastening of the buoyancy element through a bracket, such as a bow shaped element.

Preferably, the method further comprises the step of connecting the solar support modules through a common buoyancy element into the floating solar power plant.

The invention describes also to a method for assembling of the floating solar power plant support module. The method comprises the following steps of connecting the at least two beams and the at least two elongate buoyancy elements perpendicularly together to form a frame.

Preferably, the method further comprising the step of extending at least two ribs perpendicularly between the beams defining the outer edges of the frame at the surface of the beams facing away from the buoyancy elements.

### Brief description of drawings

Figure 1a shows a perspective view of a first embodiment of a solar support module with solar panels attached.
Figure 1b hows a perspective view of the first embodiment of the solar support module without solar panels.
Figure 2a shows the solar support module from figure 1a, viewed from above.
Figure 2b shows the solar support module from figure 1b, viewed from above.
Figure 3a shows the solar support module from figure 1a with solar panels, viewed from the side.
Figure 3b shows the solar support module from figure 1b without solar panels, viewed from the side.
Figure 4a shows the embodiment of the beam element from fig. 1a, in isolation, viewed from the side.
Figure 4b shows a detail view of a free end of the beam element from figure 4a.
Figure 4c shows a detail view of a vertex on the beam element from figure 4a.
Figure 4d shows a perspective view of the beam element, to illustrate the U-shape of the beam element and the flanges
Figure 4e shows a cross sectional view of the beam element with U-shaped profile.
Figure 5a shows the embodiment of the buoyancy element from fig. 1a, in isolation, viewed from above.
Figure 5b shows the buoyancy element from fig. 5a, viewed from behind.
Figure 5c shows an embodiment of a bracket for attaching the buoyancy element to the beam element, perspective view.
Figure 5d shows the embodiment of the bracket from fig. 5c, viewed from the side.
Figure 6a shows a detailed view of a rib element attached between the beam element and the solar panel, viewed from behind.
Figure 6b shows a detailed view of the rib element attached between the beam element and the solar panel, viewed from the side.
Fig. 6c shows a detailed view of the beam element with first recesses adapted to receive the rib elements.
Figure 6d shows a detailed view of the fastening mechanism for attaching the solar panel to the solar support module.
Figure 6e shows a sectional view of the first beam portion with ribs and solar panels attached.
Figure 7 shows a spacer and fastening mechanism for use between solar panels.
Figure 8 illustrates several floating solar power plant support modules assembled into a solar power plant.
Figure 9 shows the connection between two adjacent floating solar power plant support modules, in detail.

### Detailed description of the invention

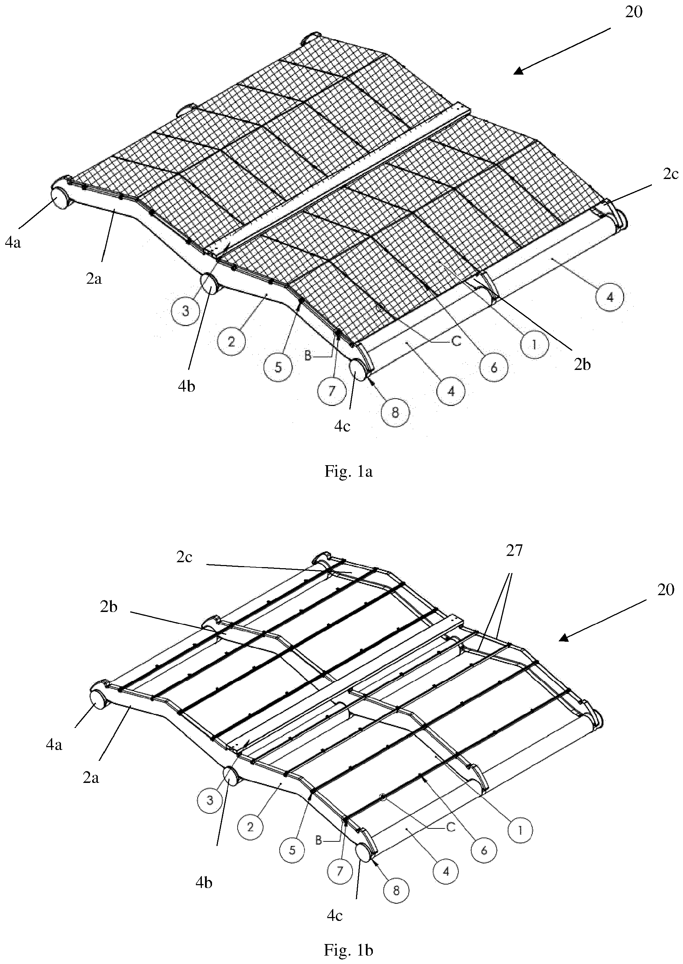

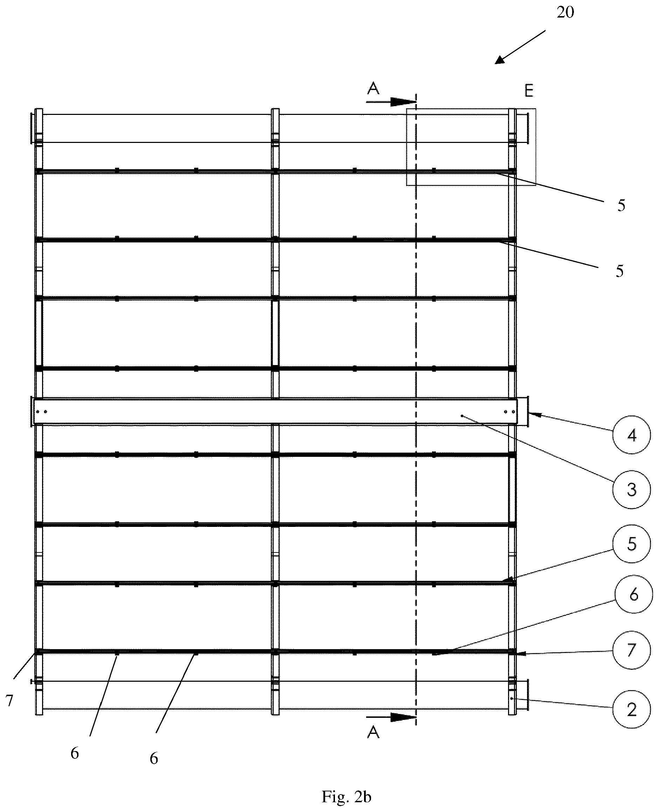

The term "floating solar power plant support module" or "floating solar support module" in short, is to be interpreted an assembly of a number of beam elements, a number of buoyancy elements and a number of rib elements into a rectangular or square frame as illustrated in the figure 1b, 2b. This solar support module is adapted to receive a number of solar panels mounted at the top surface of the solar support module as illustrated in fig. 1a, 1b.

The term "solar power plant" or "solar plant" in short, is to be interpreted as an assembly of a number of floating solar support modules into a complete structure for the actual pond, lake, reservoir etc.

The term "solar panel" is to be interpreted as the elements that absorbs sunlight as a source of energy to generate direct current electricity. The solar panels are most commonly photovoltaic solar panels. This type of panel is however not limiting for the invention.

The term "panel array" is to be interpreted as a row of solar panels extending subsequently from one outer beam element to the other outer beam element.

The term "middle" in relation to the beam element, buoyancy element, end stopper etc do not refer to an actual middle position of the solar support module. The terms rather refer to a position within the frame where the beam element is not elevated. This may be in center points of the structure or is may be offset of the center. This is defined by the number of elevations of the beam elements and the number of buoyancy elements attached to the beam elements.

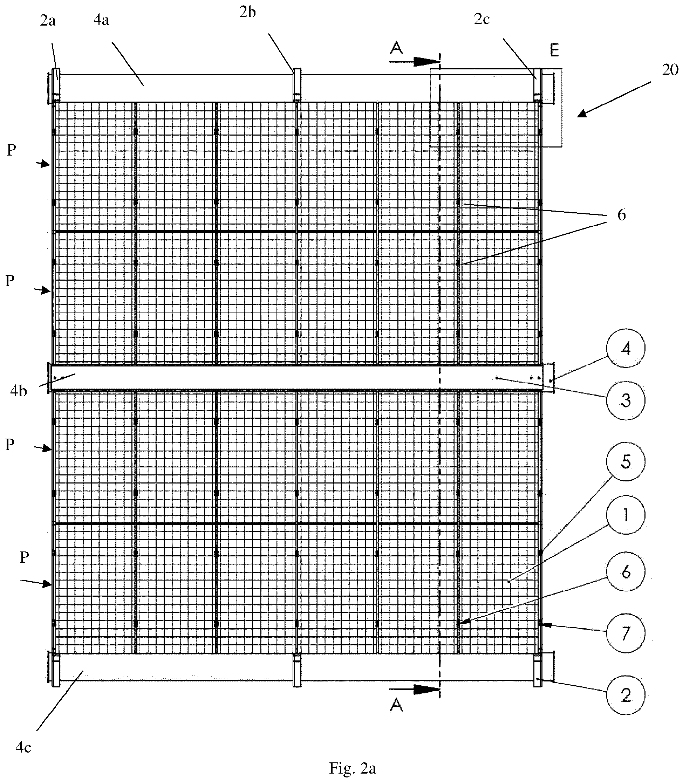

Figure 1a and 2a shows an overview of a first embodiment of a solar support module 20 with solar panels 1 attached.

Figure 1a and 2a shows as an example four panel arrays, each containing six solar panels.

Figure 1b and 2b shows the same solar support modules as in figure 1a and 2a without the solar panels 1.

Figure 1a-b shows the solar support module 20 in perspective view and figure 2a-b shows the solar support module viewed from above.

The solar support module 20 has three main components; buoyancy elements 4, beam elements 2 and rib elements 5. The beam elements 2 are connecting the buoyancy elements 4 and the rib elements 5, together. The components will be further described in the following and in connection with the figures.

The solar support modules 20 are designed to receive a plurality of solar panels 1 that are to be mounted on the upper surface of the solar support module 20.

The solar support module 20 has at least two beam elements 2. In figure 1a-1b and 2a-2b there are arranged three beam elements 2a, 2b, 2c. For simplicity, the beam elements are referred to as 2 in the figures illustrating only one beam element, since the beam elements are equal in shape. There are arranged two end beam elements 2a, 2c defining outer edges of the solar support module 20 at each side of the module 20. In addition, there is arranged a middle beam element 2b approximately in the middle between the end beam elements 2a, 2c. The beam elements 2a, 2b, 2c are arranged in parallel or substantially parallel to each other. They are also spaced apart as indicated in the figures.

Other arrangements of the beam elements 2 may be possible, for instance only two beam elements 2a, 2c defining the outer edges of the solar support module 20. More than three beam elements 2a, 2b, 2c are also possible embodiments of the invention. The space between the beam elements 2a, 2b, 2c may also vary in different designs of the solar support module 20.

Each beam element 2 having an elevated shape between the buoyancy elements 4 to reduce weight, facilitate the movement of the waves beneath the solar support module 20 and reduce the overall movement of the solar support module when installed at the water surface.

Figure 1b further indicates that the each of the beam elements 2a, 2b, 2c is a U beam. The U-beam is arranged sideways such that flanges 27 of the U-beam extends in the horizontally direction, ie in a plane perpendicular to the plane of the beam element 2. This will be further disclosed.

The solar support module 20 of figure 1a-1b and 2a-2b further comprises at least two buoyancy elements 4. In the figure 1a-1b and 2a-2b, there are disclosed three buoyancy elements 4a, 4b, 4c. There are arranged two end buoyancy elements 4a, 4c defining outer edges of the solar support module 20 at each side of the module 20. In addition, there is arranged a middle buoyancy element 4b in the middle between the end buoyancy elements 4a, 4c.

For simplicity, the buoyancy elements are referred to as 4 in the figures illustrating only one buoyancy element, since the buoyancy elements are equal in shape.

The buoyancy elements 4a, 4b, 4c are arranged in parallel or substantially parallel to each other. They are also spaced apart as indicated in the figures. The buoyancy elements 4a, 4b, 4c are perpendicularly or substantially perpendicularly arranged with respect to the beam elements 2a, 2b, 2c. The assembly of beam elements 2a, 2b, 2c and buoyancy elements 4a, thus forms a rectangular or a square frame of the solar support module 20 as shown in the figures.

Other arrangements of the buoyancy elements 4 may be possible, for instance only two buoyancy elements 4a, 4c defining the outer edges of the solar support module 20. More than three buoyancy element 4a, 4b, 4c are also possible embodiments of the invention. The space between the buoyancy element 4a, 4b, 4c may also vary in different designs of the solar support module 20.

The solar support module 20 further comprises a plurality of rib elements 5. The rib elements 5 are designed as elongated, rigid elements. The rib elements are arranged to form a girder at the top surface of the solar support module 20 to provide a further stiffening or rigidity of the solar support module 20. The rib elements 5 are extending between the outer beam elements 4a, 4c at the surface facing away from the buoyancy element 4a, 4b, 4c. This is shown in figure 1b and 2b. The rib elements 5 are arranged perpendicular or substantially perpendicular to the longitudinally direction of the beam elements 2a, 2b, 2c. The rib elements 5 are further arranged in parallel or substantially in parallel with the buoyancy members 4a, 4b, 4c in the longitudinal direction of the rib elements 5 and buoyancy members 4. The rib elements 5 are in the figure placed according to the panel configuration with minimum two rib elements 5 per panel array P (figure 2a). In other words, at least two rib elements 5 are supporting each solar panel 1. Other arrangement of the rib elements 5 are also possible embodiments of the invention.

The rib elements 5 are arranged between the beam elements 2a, 2b, 2c and solar panels 1 when the solar panels 1 are mounted on the solar support module 20 as illustrated in figure 1a and 2a. The rib elements 5 are further arranged in a first recesses 26 of the beam element 2. This will be further described.

The figure 1a-1b and fig. 2a-2b further shows a walkway 3 extending in the middle of the solar support module 20. The walkway 3 is further illustrated extending between the end beam elements 2a, 2c.

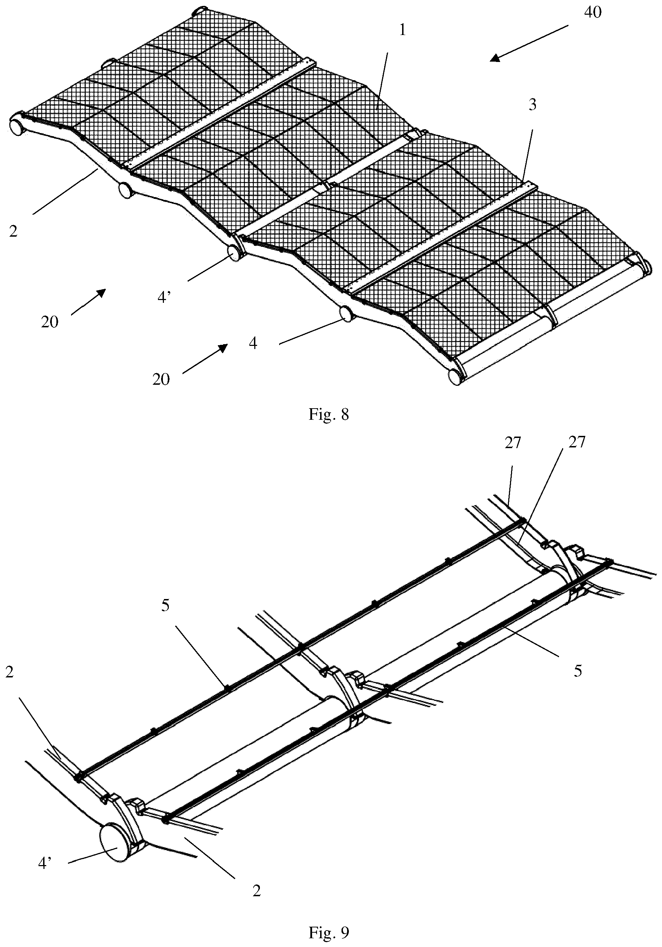

It is to be noted that the figures 1a-1b and 2a-2b are illustrating a single solar support module 20. A number of equal solar support modules 20 may be connected at all ends of the solar support module 20 to build a solar plant for a particular lake or seaside etc. This is shown in figure 8 and 9.

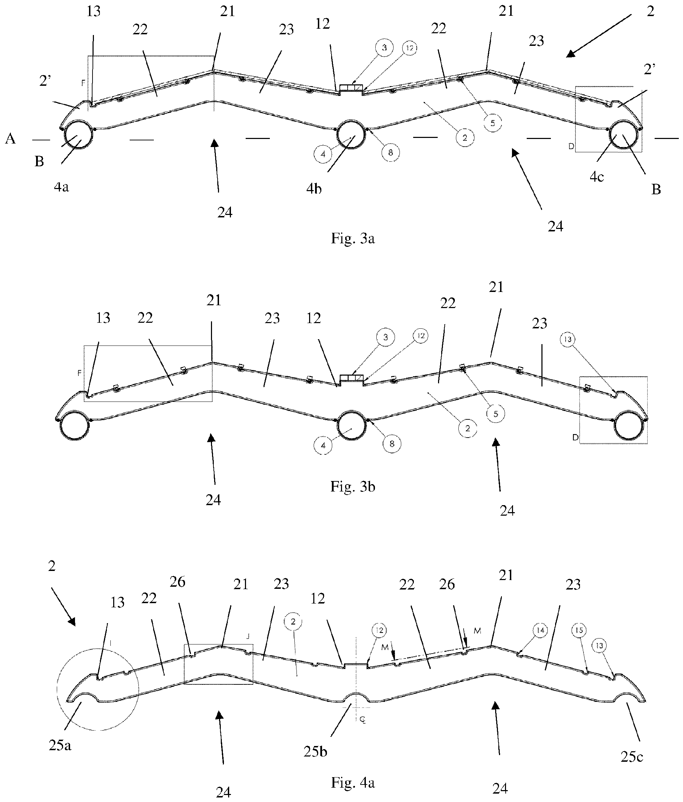

The beam elements 2a, 2b, 2c of the solar support module 20 are illustrated in further detail by the figure 3a-3b and 4a-4d.

The individual features of the solar support module 20 will be described further in relation to the figures 3-7.

As indicated in figure 3a-3b and 4a the each beam element 2 is preferably made as one elongated piece.

Each of the beam elements 2, rib elements 5 and the buoyancy elements 4 have a rigid structure. The assembly of the different elements 2, 4, 5 together in the grid structure provides an improved rigid structure that also provides an improved stability on the water surface.

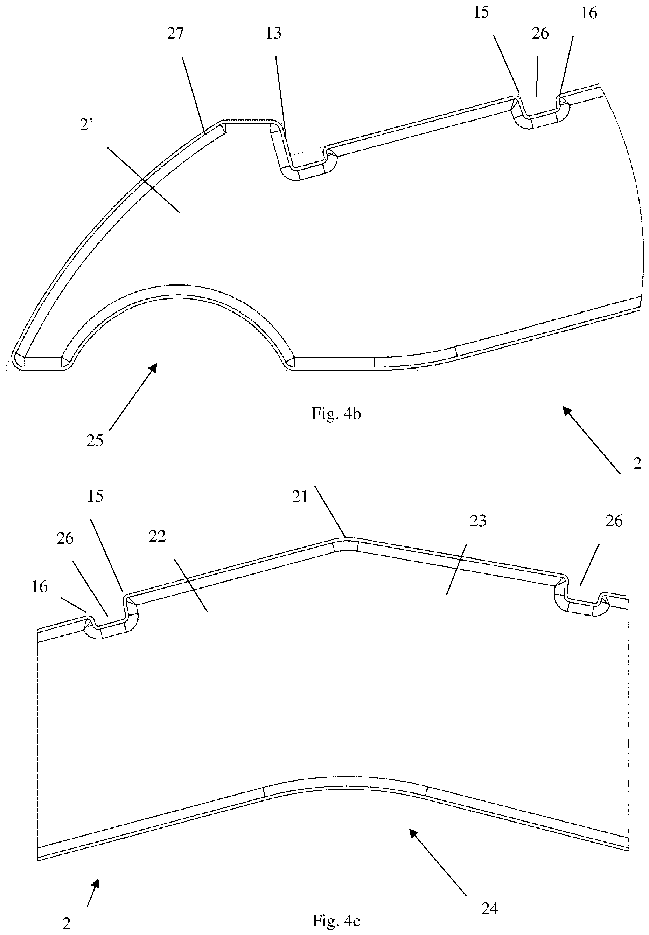

At the surface of the beam element 2 facing the water surface there are arranged semi-circled second recesses 25a, 25b, 25c (fig. 4b). The second recesss 25a, 25b, 25c are adapted to receive the buoyancy elements 4a, 4b, 4c, respectively. The second recesses 25a, 25b, 25c do not need to have a semicircle shape. However, it is preferable that the second recesses 25a, 25b, 25c have a congruent shape as the buoyancy element 4 , to facilitate the connection with the buoyancy element 4.

It is further preferably that the respective second recess 25 have a shape so that the recesses mates with less than half of a cross-sectional surface of the buoyancy element 4. For a buoyancy element 4 as illustrated in fig. 4b, this means the second recess 25 is formed as a less than half circle, ie the circle is less than 180 degree. This provides an easy and rigid connection between buoyance element 4 and the beam element 2.

The number of second recesses 25a, 25b, 25c in each beam element 2 corresponds with the number of buoyancy elements 4 required in the solar support module 20. The figures 4a and 4b shows the second recess 25a, 25b, 25c (also named 25) in one single beam element 2 according to an embodiment of the invention, in greater detail.

The beam element 2a, 2b, 2c is further made with at least one lifted or elevated portion 21, as shown in the figure 3a-b, 4a and in greater detail in figure 4c. The lifted portion 21 is defined as the highest point on a vertex 21 in one single beam element 2a, 2b, 2c. The vertex 21 thus divides the beam element 2 in at least two portions; a first beam portion 22 and a second beam portion 23. The first beam portion 22, the second beam portion 23 and the vertex 21 constitute an angled portion 24. The beam element 2 as shown in the embodiment of the figure have two angled portions 24. However, only one, or more than one angled portion 24 may be possible embodiments of the invention. The respective angled portions 24 is preferably equal so that the lifted portions 21 are equal throughout a single beam element 2. The angled portions 24 may also be different throughout the single beam element 2.

Both the first beam portion 22 and the second beam portion 23 have an angle distance α₁, α₂ to a horizontal plane A extending through the center B of the buoyancy elements 4a, 4b, 4c. The angled distance α₁, α₂ may be between 10-45°. A more preferred angled α₁, α₂ distance may be between 10-25°. The indicated range is however not limiting for the invention, other angle distances α₁, α₂ may also be possible. The angled distances α₁, α₂ is preferably equal for both the first and second beam portion 22, 23. The angled distance α₁ and the angled distance α₂ may however also be different for the first and second beam portions 22, 23, respectively.

The beam elements 2 that are to be used in the same solar support module 20 must however have corresponding angled portions 24 so that they follow the substantially the same curvature throughout the longitudinal direction of the beam element 2.

The beam element(s) 2 may be produced with a specific angled distance optimized for the sun radiation/receiving of energy.

A further advantage of different angles is that the floating solar modules may to adapt to different wave characteristics.

The first beam portion 22 and the second beam portion 23 is extending in opposite directions upwardly between two adjacent buoyancy elements 4a and 4b or 4b and 4c. In the embodiment disclosed in the figures, this results in that there are two equal lifted portions 21 defined respectively by a pair of first and second beam portions 22, 23.

The respective beam element 2 further comprises a plurality of first recesses 26 disposed on the surface of the beam element 2 facing away from the second recess(es) 25. The first recesses 26 are adapted to respectively receive the rib elements 5 and are thus having a matching shape as the rib elements 5, ie a U-formed shape.

The first recesses 26 may be equally disposed in the longitudinally direction for the beam element 2. The first recesses 26 may also be arranged with different spaces between the first recesses 26 in a single beam element 2.

There must however be two first recesses 26 arranged in each of the first and second beam portions 22, 23 as indicated in the figure 4a. The first recesses 26 of the beam elements 2 in one solar support module 20 are also arranged so that the rib elements 5 received in the first recesses 26 are parallel. The first recesses 26 are thus arranged so that the rib elements 5 arranged in the first recesses 26 of the beam elements 2 forms a grid where beam elements 2 extending in a first longitudinal direction and the rib elements 5 extending in a second longitudinal direction that is perpendicular to the first direction. The pair of first recesses 26 arranged in a beam portion 22, 23 must also be arranged at different elevation as indicated in the figures 3a-b, 4a. since the first recesses 26 in each beam portions 22, 23 are arranged in different elevation, the pair of rib elements 5 arranged in a beam portion 22, 23 also are also arranged at different elevation. This provides a stronger structure as the grid structure is formed by different planes. This further provides an improved torsional stiffness for the solar support module.

There are disclosed 10 first recesses 26 in each beam element 2 in the illustrated embodiment of the figures. This is only for exemplary purpose. More than 10 or less than 10 first recesses 26 and rib elements 5 are also possible embodiments of the invention.

The first recesses 26 may be formed so that one of the edges 14, 15 of the first recess 26 is higher than the other edge 16. This is clear from figure 4b. In the figures, and especially figure 4b and figure 4b, 4c, it is indicated that the edge 15 facing the free end of the beam element 2' and the elevated portion 21 of the beam element 2 are higher that the edges 16 facing the middle of the beam portions 22, 23. This provides a support for the panel on the higher edge 16. It further provides some air and prevents unintentional contact areas between the solar panel 1 and the surface of the beam 2 in the middle portion of the beam portion 22, 23.

It is the rib elements 5 that mainly supports the panels 1 when arranged on the solar support module 20.

The material of the beam element 2 is preferably materials with high strength/weight ratio. This may be a composite material, such as Glass Reinforced Polyester (GRP). Other material maybe Aluminium. The GRP material has the advantage that it is not degraded by water. The material is also lightweight in comparison with the strength of the material and may also be tailored to the specific need.

The beam element 2 further comprises end stoppers 12, 13. The end stoppers 12, 13 may be seen in all of the figure 1a-4c but are illustrated in detail in figure 4a and 4b.

In figure 4b a first end stopper 13 is arranged. The first end stopper 13 is arranged near the free end of the beam element 2' as shown in figure 4b. The first end stopper 13 may be designed as an end wall. Each of the panels 1 to be mounted in the first panel array P is adapted to bear against the first end stopper 13. This provides a simplified method for arranging the panels 1 in the solar support module 20. A similar end stopper 12 is arranged at the opposite free end of the beam element 2' for aligning the panel array P at this end.

Figures 3a-4a shows a similar end stopper, referred to as a second end stopper 12, arranged in the middle portion of the beam element 2. The second end stopper 12 is arranged beneath the walkway 3 and is arranged to support and align the solar panel array P arranged at both sides of the middle portion of the beam element 2. The positioning of the second end stopper 12 corresponds with the part or parts or the beam elements 2 that is not elevated and where an additional buoyancy member or members 4b is attached.

In general, the end stoppers 12, 13 are arranged at non elevated portions of the respective beam element 2.

The first and second end stopper 12, 13 thus provides a directional measurement for the solar panel arrays P arranged near the end stoppers 12, 13 at both sides of the first and second beam portions 22, 23.

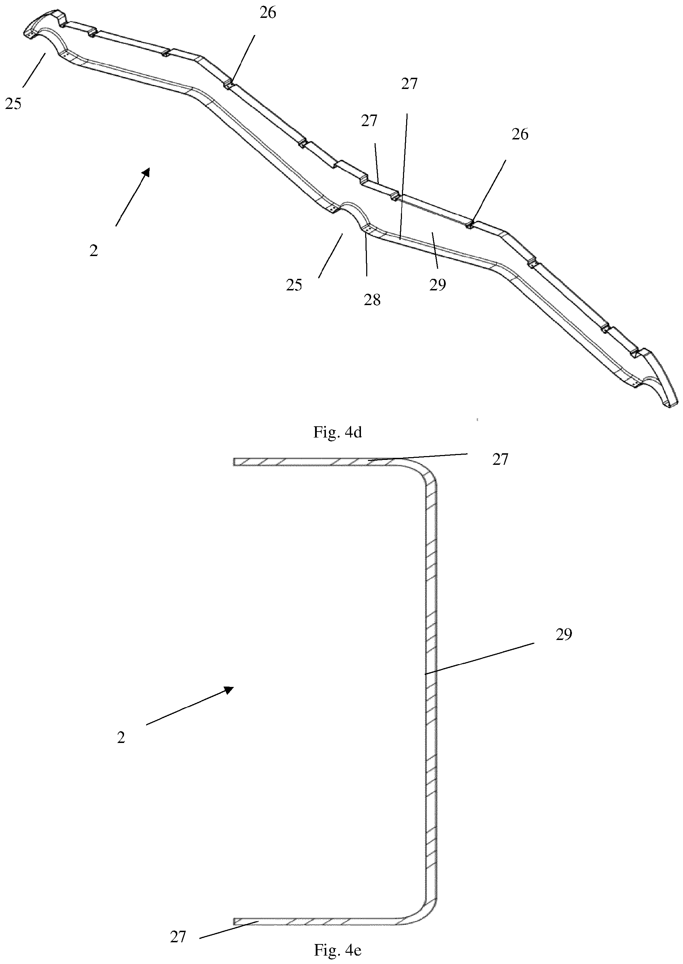

Figure 4d discloses the beam element 2, perspective view. The figure shows clearly the U-shape of the beam 2. The beam element has a flange 27 extending from a main part of the beam element 29 along the entire circumference of the beam element 2. The beam element will thus have flanges 27 extending perpendicularly from the main part of the beam element 29. This provides an improved stability for the beam element 2.

The figure 4d also indicates holes 28 adapted to correspond with holes in a bracket 30 to secure the buoyancy element 4 in the second recess 25.

The design of the beam element 2 further provides an improved stability in all connections between the beam element 2 and other elements. Other elements may for instance be the buoyance element 4 and the rib element 5.

Figure 4e illustrates the U- shape in detail. The beam element 2 has a main part 29 and flanges 27 extending on the top part and bottom part of the beam element 2. The flanges 27 is extending horizontally to make use of the flanges for stability purposes and increase the contact surface between the beam element 2 and the connecting elements; rib elements 5 and buoyancy elements 4. As indicated in the figure, there is some space between the flanges 27. The main part 29 thus also have some defined length which also increases the stability and robustness of the structure.

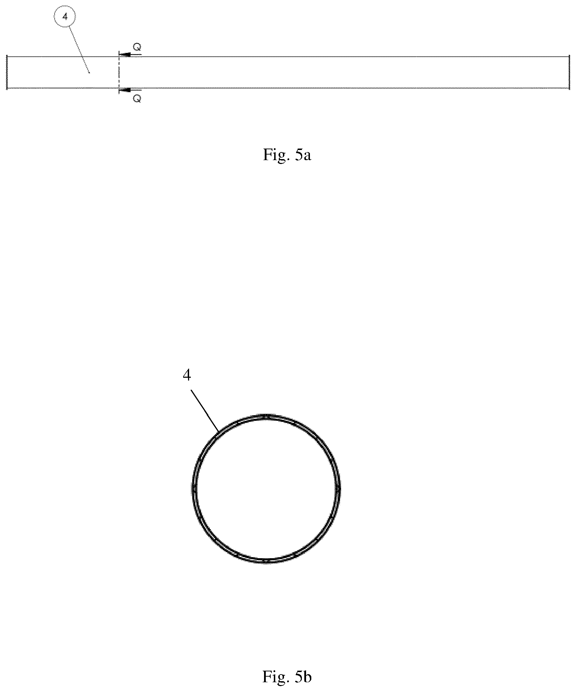

Figure 5a is illustrating the buoyancy element 4 isolated. The buoyancy element 4 is disclosed as a cylinder shaped, elongate element. However other shapes are possible embodiments of the invention.

The buoyancy element 4 is intended to maintain the floating ability of the solar support module 20. The total number of buoyancy elements 4 must thus have enough capacity to keep the solar support module 20 with several solar panels 1, floating.

The buoyancy element 4 is further made of a material that provides a rigid part of the solar support module 20. Preferable materials may be Polyethylene or other thermoplastic materials.

The arrangement of the buoyancy elements 4 in the solar support module 20 further provides an improved movement on the water surface with respect to waves etc. There is a space between the buoyancy elements 4 or between the modules 20 such that the waves may move without any/less hindrance.

The buoyancy elements 4 thus provides both buoyancy and rigidity at the same time.

Figure 5b shows the buoyancy element 4 viewed from the behind.

The buoyancy element 4 further has a shape so that it may easily fit into the shape of the second recess(s) 25 in the beam element 2. The shape shown in figure 5b is circular. The buoyancy element 4 fitted in the second recess 25 provides a further stability for the connection. The second recess 25 facilitates that the buoyancy element 4 are prevented from moving in relation to the beam element, when connected to the beam element 2.

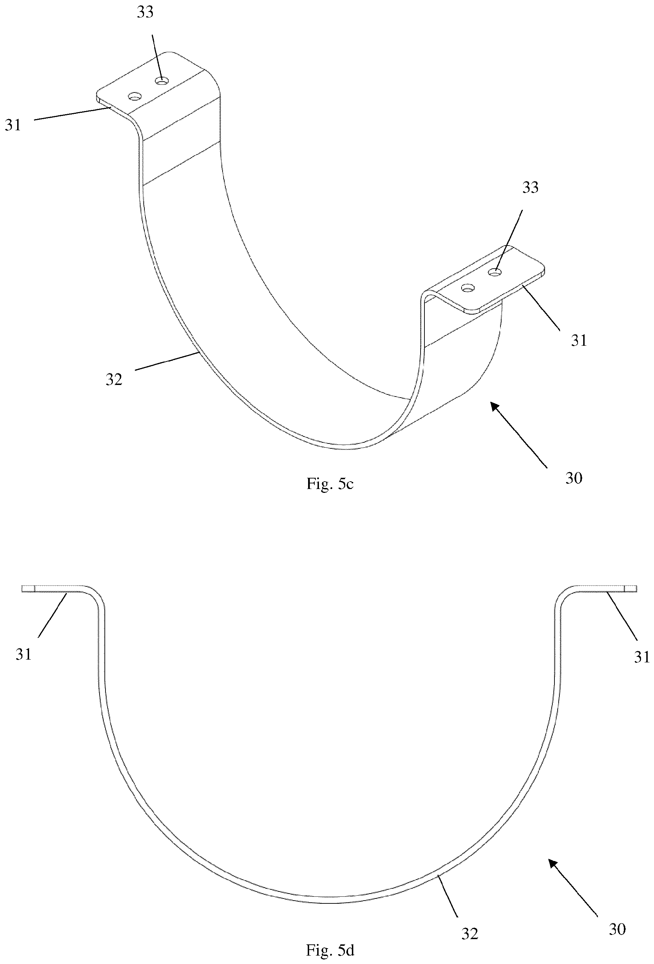

Figure 5c and 5d is illustrating a bracket 30 for securing the buoyancy element 4 to the beam element 2. The buoyancy element 4 is resting in the bracket 30 and further attached on both ends at each side of the semi-circled second recess 25 in the beam element 2. The bracket 30 have a flange portion 31 at each side of the bow shape part 32 for connecting to the beam element 2 and facilitate the attachment between the beam element 2 and the bracket 30.

There are further indicated through holes 33 in the flange portion 31 for receiving fastening devices, such as bolts etc. There is arranged a bracket 30 to each semi-circled second recess 25 of the beam elements 2.

As an illustrating example, there are indicated three brackets 30 to each beam elements 2a, 2b, 2c. These are fastening each beam elements to each buoyancy element 4. This provides a total of nine brackets 30 attaching three buoyancy elements 4a, 4b, 4c to the three beam elements 2a, 2b, 2c. The flange portion 31 may be attached to the beam element 2 through bolt and lock nut (not shown) in a per se known way.

The buoyancy element 4 may however be attached to the beam element(s) 2 in other ways than through the bracket(s) 30. Other options are also possible embodiments of the invention.

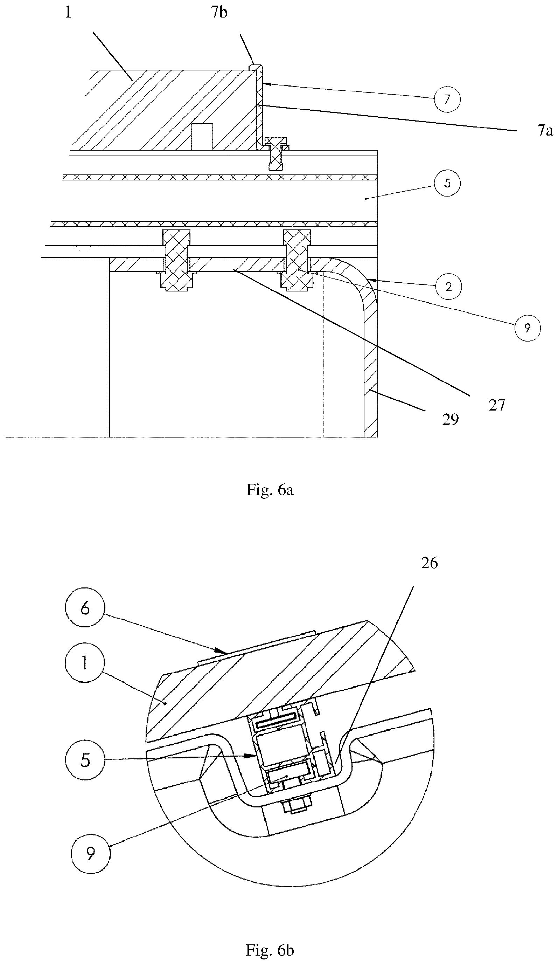

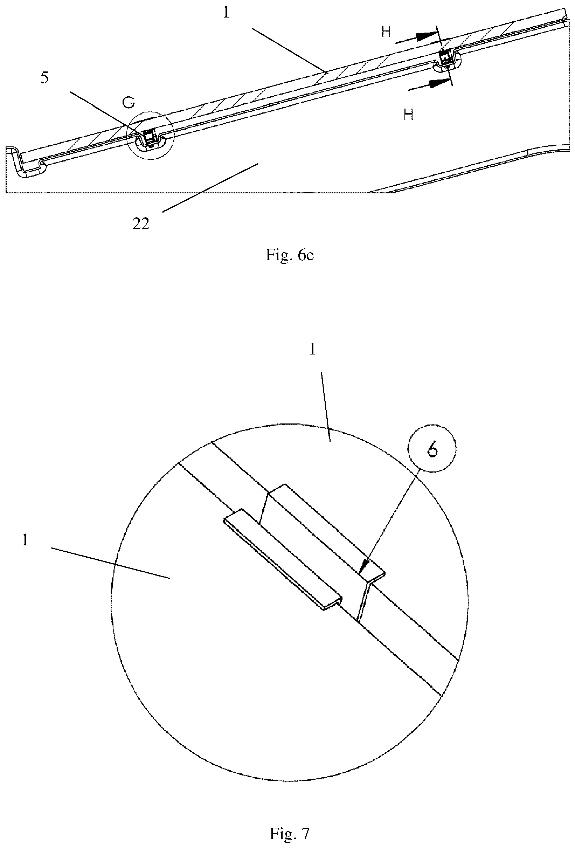

Figure 6a- 6e are illustrating the rib element(s) 5 and the connection to the beam element(s) 2 in detail.

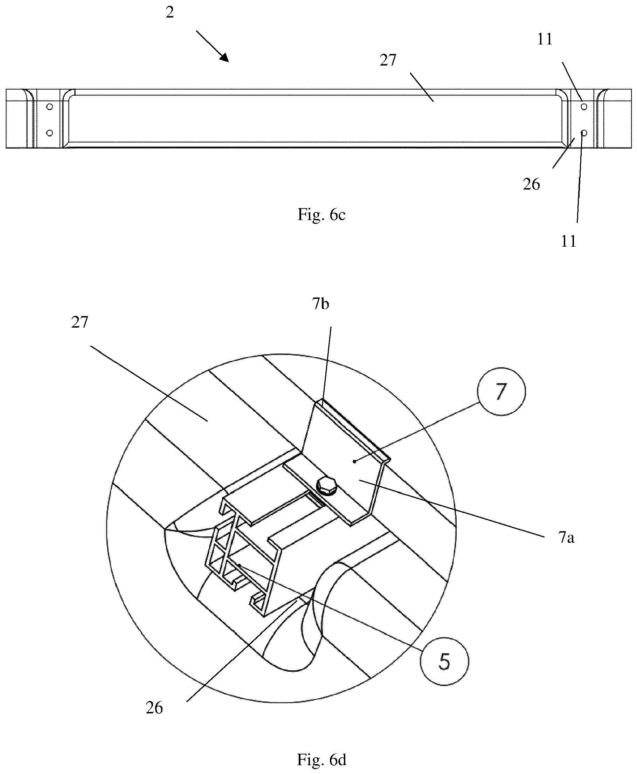

The rib element 5 are arranged in the first recesses 26 as described above. The rib elements may be secured to the beam element 2 by a fastening mechanism, such as a bolt 9. The fastening mechanism 9 is per se known. The fastening mechanism 9 is shown in detail in figure 6a and 6b, while the figure 6c shows through holes 11 in the beam element 2 to receive the fastening mechanism 9. Both figure 6a and 6c shows the flange 27 of the beam element 2. As indicated in figure 6a the U-shaped beam with flange provides a fastening of the rib element 5 to the beam element 2 through two fastening mechanism 9. This provides rigid connection and increased stability for the solar support module 20. Figure 6c further illustrated the flange 27 size of the U-shaped beam element 2.

The rib element 5 further comprises a solar panel lock 7. There is arranged a solar panel lock 7 at the end of each rib element 5. The solar panel lock 7 is arranged at the surface adapted to receive the solar panel 1. The solar panel lock 7 is adapted to attach the solar panel 1 to the rib element 5 and thus also attach the solar panel 1 to the solar support module 20. This may be performed in a number of different ways, but in the illustrated embodiment the solar panel lock 7 is designed as a slidable lock that is adapted to be moved towards an edge of the solar panel 1 to secure the panel 1 to the rib element 5. The solar panel lock 7 further has a vertical surface 7a with a horizontally arranged end hook 7b. The vertically surface 7a and the end hook 7b is shaped to match the height of the solar panel 1 to fasten the panel 1 to the solar support module 20. This is illustrated in detail in figure 6a and 6d.

There are arranged one solar panel lock 7 at the free end of each rib element 5. This results in that a solar panel 1 is attached to the solar support module 20 by two solar panel locks 7 arranged at two differently arranged rib elements 5.

The material of the rib elements 5 may preferable be a high strength/weight ratio material, such as GRP, aluminum. Other corrosion resistant materials may however also be possible materials.

Figure 7 is illustrating a spacer 6. There are arranged a number of spacers 6 between the solar panels 1. The spacers 6 are fixed onto the respective rib elements 5. This is also illustrated in figure 1a-2b. The figure 6b is also indicating the spacer 6 at the top of the solar panels 1 in further detail.

When mounting a solar panel 1 onto the solar support module 20 at one of the ends along the outer beam elements 2a, 2c, the panel 1 is thus held in place by two solar panel lock 7 at one side of the panel 1 and two spacers 6 at the opposite side of the panel 1. When mounting a solar panel 1 in the middle of the solar support module 20, the solar panels 1 are held in place by spacers 6 at both sides of the solar panel 1. The spacer 6 is known per se.

The solar panel 1 may also be arranged with a differently designed spacer, all of these being embodiments of the invention.

The mounting of the individual solar support module 20 will be described further in the following:
The respective elements, such as the buoyancy elements 4, beam elements 2, rib elements 5, that is required for an assembled solar support module 20 are transported to the location or site in separate pieces. The solar panels 1 are also transported individually to the site. The site may for instance be the shore next to the lake, pond, reservoir etc. where solar plant is intended to be used. A typical weight of the single elements to be assembled are 50 kg or less so that each part may easily be lifted and assembled manually.

The buoyancy elements 4 are arranged in the predefined second recesses 25 in the beam elements 2 and attached to each beam element 2 through the bracket 30 or other fastening arrangements.

The rib elements 5 are further arranged in the first recesses 26 at the top of the beam elements 2. The assembled arrangement is now forming one floating solar support module 20 as shown in fig. 1a-1b and 2a-2b. A plurality of solar panels may be arranged on top of the solar support module 20 through the solar panel and stopper 7 as describe above.

Several solar support modules 20 may be assembled together forming the solar plant, as shown in figure 8). There may also be arranged walkways between two adjacent support modules 20 as illustrated in the figure. This will ease the access to the solar power plant.

The floating solar support module 20 is arranged so that the contact through the entire bottom part of the entire solar support module 20 is avoided. In commonly known solar support plant, entire square or rectangular part of the module is in contact with the water surface to provide a rigid structure. However, it is known to give a certain excessive movement when there are movement in the water surface.

In the solar support module according to the invention there are therefore rib elements 5 that are attached to the solar panels 1 the solar support module 20 in a way such that the rib elements 5 along with solar panels 1 act as a rigid or strutting element to further increase the rigidity of the structure. The beam elements 2 further allow water to move freely underneath the solar panels to reduce excess movement.

Figure 8 illustrates several floating solar power plant support modules 20 assembled into a solar power plant 40. The figure shows two solar support modules 20 interconnected through a common buoyancy element 4'.

Figure 9 shows in detail the connection between two adjacent floating solar power plant support modules 20. As illustrated in the figure, the end buoyance element of solar support module becomes a common buoyancy element 4' for the beam elements 2 of both solar support modules 20. The beam elements are connected to the common buoyancy element 4' in the same way as described above with arranging the buoyancy element 4' in the second depression and securing the parts together.

The present invention has been described with reference to a preferred embodiment and some drawings for the sake of understanding only and it should be clear to persons skilled in the art that the present invention includes all legitimate modifications within the ambit of what has been described hereinbefore and claimed in the appended claims.

## Claims

1. A floating solar power plant support module that comprises at least two elongate buoyancy elements (4a, 4b, 4c), said at least two elongate buoyancy elements (4a, 4b, 4c) being substantially parallelly arranged, at least two beam elements (2a, 2b, 2c) connected to the elongate buoyancy elements (4a, 4b, 4c), said at least two beam elements (2a, 2b, 2c) being substantially perpendicularly arranged with respect to the elongate buoyancy elements (4a, 4b, 4c), said at least two beam elements (2a, 2b, 2c) having each a vertex portion (21) arising from an angled portion (24) of the respective beam element (2a, 2b, 2c) situated between two adjacent buoyancy elements (4a, 4b ,4c), wherein the at least two beam elements (2a, 2b, 2c) are respectively formed as a U-shaped beam element (27, 29) with flanges (27), said respective beam elements (2a, 2b, 2c) having at least two second recesses (25) adapted to respectively receive at least a portion of the buoyancy element (4a, 4b, 4c), and at least two first recesses (26), said first and second recesses (25, 26) being formed in the surface of the flanges (27), the solar support module further comprises at least two elongate rib elements (5) arranged respectively in the first recesses (26) of the at least two beam elements (2a, 2b, 2c), said the at least two rib elements (5) being substantially perpendicularly arranged with respect to the at least two beam elements (2a, 2b, 2c), wherein the first recesses (26) and the second recesses (25) are arranged in opposite flanges (27) of the U-shaped beam elements.

2. The floating solar power plant support module according to claim 1, wherein the flanges extend in a direction parallelly arranged to a plane (A) extending through the centre (B) of the buoyancy elements (4a, 4b, 4c).

3. The floating solar power plant support module according to claim 1 or 2, wherein the at least two elongate buoyancy elements (4a, 4b, 4c), the at least two beams (2a, 2b, 2c) and at least two elongate rib elements (5) are respectively arranged spaced apart

4. The floating solar power plant support module according to claim 1, 2 or 3, wherein said angled portion (24) comprises a first beam portion (22) and a second beam portion (23), said first and second beam portion (22, 23) having each an angled distance (α₁, α₂) from a horizontal plane (A) extending through the center (B) of the buoyancy elements (4a, 4b, 4c).

5. The floating solar power plant support module according to claim 4, wherein the angled distance (α₁, α₂) of said first and second beam portion (22, 23) is equal or the angled distance (α₁) of the first beam portion (22) is different from the angled distance (α₂) of the second beam portion (23).

6. The floating solar power plant support module according to any of the claims 2-5, wherein the angled distance (α₁, α₂) is between 10-45°.

7. The floating solar power plant support module according to any of the claims 1-6, wherein the support module (20) has a plurality of rib elements (5) distributed separately in the first recesses (26) throughout the length of the respective beam elements (2a, 2b, 2c).

8. The floating solar power plant support module according to any one of the claims 1-7, wherein the second recess (25) in the beam element (2a, 2b, 2c) is semi-circular to mate with a circular buoyance element (4a, 4b, 4c).

9. The floating solar power plant support module according to any one of the claims 1-8, wherein the support module further comprises a bracket (30) for securing the buoyancy element (4a, 4b, 4c) to the beam element (2a, 2b, 2c).

10. The floating solar power plant support module according to any one of the claims 1-9, wherein each beam element (2a, 2b, 2c) comprises end stoppers (12, 13) arranged at non-elevated portions of the beam element 2a, 2b, 2c) in order to facilitate the positioning of the panel (1).

11. A floating solar power plant **characterized in that** said power plant comprises a plurality of interconnected floating solar power plant support modules (20) according to any of the claims 1-10, wherein one of the at least two buoyancy elements (4a, 4b, 4c) is a common buoyancy element (4') connected to the beam elements (2a, 2b, 2c) from two adjacently arranged solar power plant support modules (20).

12. The floating solar power plant according to claim 11, wherein the solar power plant comprises a walkway (3).

13. A method for assembling a floating solar power plant module according to any one of the claims 1-10 at a remote location where a floating solar power plant is to be installed, **characterized in that** the method comprises the following steps;
- transporting the individual elements (2, 4, 5, 1) separately to the remote location,
- connecting the at least two beam elements (2a, 2b, 2c) and the at least two elongate buoyancy elements (4a, 4b, 4c) substantially perpendicularly together to form a frame, by arranging the buoyancy element (4) in the second recess (25) of each beam element (2) and securing the buoyance element (4) to the beam element (2),
- securing at least two ribs (5) substantially perpendicularly at the first recesses (26) of the beam elements (2).

14. The method according to claim 13, wherein the method further comprises the step of fastening the buoyancy element through a bracket, such as a bow shaped element (30).

15. The method according to claim 13 or 14, wherein the method further comprises the step of connecting the solar support modules through a common buoyancy element (4').

## Patentansprüche

1. Schwimmendes Trägermodul für ein Solarkraftwerk, das umfasst
mindestens zwei längliche Auftriebselemente (4a, 4b, 4c), wobei die mindestens zwei länglichen Auftriebselemente (4a, 4b, 4c) im Wesentlichen parallel angeordnet sind,
mindestens zwei Balkenelemente (2a, 2b, 2c), die mit den länglichen Auftriebselementen (4a, 4b, 4c) verbunden sind, wobei die mindestens zwei Balkenelemente (2a, 2b, 2c) hinsichtlich der länglichen Auftriebselemente (4a, 4b, 4c) im Wesentlichen senkrecht angeordnet sind, wobei die mindestens zwei Balkenelemente (2a, 2b, 2c) jedes einen Scheitelabschnitt (21), der aus einem abgewinkelten Abschnitt (24) des jeweiligen Balkenelements (2a, 2b, 2c) hervorgeht, aufweist, der zwischen zwei angrenzenden Auftriebselementen (4a, 4b, 4c) liegt,
wobei die mindestens zwei Balkenelemente (2a, 2b, 2c) jeweils als ein U-förmiges Balkenelement (27, 29) mit Flanschen (27) ausgebildet sind, wobei die jeweiligen Balkenelemente (2a, 2b, 2c) mindestens zwei zweite Aussparungen (25), die geeignet sind, um jeweils mindestens einen Abschnitt des Auftriebselements (4a, 4b, 4c) aufzunehmen, und mindestens zwei erste Aussparungen (26) aufweisen, wobei die ersten und die zweiten Aussparungen (25, 26) in der Oberfläche der Flansche (27) ausgebildet sind,
das Solarträgermodul ferner mindestens zwei längliche Rippenelemente (5), die jeweils in den ersten Aussparungen (26) der mindestens zwei Balkenelemente (2a, 2b, 2c) angeordnet sind, umfasst, wobei die mindestens zwei Rippenelemente (5) hinsichtlich der mindestens zwei Balkenelemente (2a, 2b, 2c) im Wesentlichen senkrecht angeordnet sind, wobei die ersten Aussparungen (26) und die zweiten Aussparungen (25) in gegenüberliegenden Flanschen (27) der U-förmigen Balkenelemente angeordnet sind.

2. Schwimmendes Trägermodul für das Solarkraftwerk nach Anspruch 1, wobei sich die Flansche in eine Richtung, die zu einer Ebene (A) parallel angeordnet ist, erstrecken, die sich durch die Mitte (B) der Auftriebselemente (4a, 4b, 4c) erstreckt.

3. Schwimmendes Trägermodul für das Solarkraftwerk nach Anspruch 1 oder 2, wobei die mindestens zwei länglichen Auftriebselemente (4a, 4b, 4c), die mindestens zwei Balken (2a, 2b, 2c) und mindestens zwei längliche Rippenelemente (5) jeweils beabstandet zueinander angeordnet sind.

4. Schwimmendes Trägermodul für das Solarkraftwerk nach Anspruch 1, 2 oder 3, wobei der abgewinkelte Abschnitt (24) einen ersten Balkenabschnitt (22) und einen zweiten Balkenabschnitt (23) umfasst, wobei der erste und der zweite Balkenabschnitt (22, 23) jeder einen Winkelabstand (α₁, α₂) von einer horizontalen Ebene (A), die sich durch die Mitte (B) der Auftriebselemente (4a, 4b, 4c) erstreckt, aufweist.

5. Schwimmendes Trägermodul für das Solarkraftwerk nach Anspruch 4, wobei der Winkelabstand (α₁, α₂) des ersten und des zweiten Balkenabschnitts (22, 23) gleich ist oder sich der Winkelabstand (α₁) des ersten Balkenabschnitts (22) von dem Winkelabstand (α₂) des zweiten Balkenabschnitts (23) unterscheidet.

6. Schwimmendes Trägermodul für das Solarkraftwerk nach einem der Ansprüche 2 bis 5, wobei der Winkelabstand (α₁, α₂) zwischen 10-45° liegt.

7. Schwimmendes Trägermodul für das Solarkraftwerk nach einem der Ansprüche 1 bis 6, wobei das Trägermodul (20) eine Vielzahl von Rippenelementen (5), die in den ersten Aussparungen (26) über die gesamte Länge der jeweiligen Balkenelemente (2a, 2b, 2c) separat verteilt sind, aufweist.

8. Schwimmendes Trägermodul für das Solarkraftwerk nach einem der Ansprüche 1 bis 7, wobei die zweite Aussparung (25) in dem Balkenelement (2a, 2b, 2c) halbkreisförmig ist, um mit einem kreisförmigen Auftriebselement (4a, 4b, 4c) zusammenzupassen.

9. Schwimmendes Trägermodul für das Solarkraftwerk nach einem der Ansprüche 1 bis 8, wobei das Trägermodul ferner eine Halterung (30) zum Sichern des Auftriebselements (4a, 4b, 4c) an dem Balkenelement (2a, 2b, 2c) umfasst.

10. Schwimmendes Trägermodul für das Solarkraftwerk nach einem der Ansprüche 1 bis 9, wobei jedes Balkenelement (2a, 2b, 2c) Endstopfen (12, 13), die an nicht erhöhten Abschnitten des Balkenelements (2a, 2b, 2c) angeordnet sind, umfasst, um die Positionierung des Paneels (1) zu ermöglichen.

11. Schwimmendes Solarkraftwerk, **dadurch gekennzeichnet, dass** das Kraftwerk eine Vielzahl von miteinander verbundenen schwimmenden Trägermodulen (20) für das Solarkraftwerk nach einem der Ansprüche 1 bis 10 umfasst, wobei eines der mindestens zwei Auftriebselemente (4a, 4b, 4c) ein gemeinsames Auftriebselement (4') ist, das mit den Balkenelementen (2a, 2b, 2c) von zwei angrenzend angeordneten Trägermodulen (20) für das Solarkraftwerk verbunden ist.

12. Schwimmendes Solarkraftwerk nach Anspruch 11, wobei das Solarkraftwerk einen Laufsteg (3) umfasst.

13. Verfahren zum Zusammenbauen eines schwimmenden Solarkraftwerksmoduls nach einem der Ansprüche 1 bis 10 an einem entfernten Ort, wo ein schwimmendes Solarkraftwerk aufgebaut werden soll,
**dadurch gekennzeichnet, dass** das Verfahren die folgenden Schritte umfasst;
- separat Transportieren der einzelnen Elemente (2, 4, 5, 1) zu dem entfernten Ort,
- im Wesentlichen senkrecht miteinander Verbinden der mindestens zwei Balkenelemente (2a, 2b, 2c) und der mindestens zwei länglichen Auftriebselemente (4a, 4b, 4c), um einen Rahmen durch Anordnen des Auftriebselements (4) in der zweiten Aussparung (25) jedes Balkenelements (2) und Sichern des Auftriebselements (4) an dem Balkenelement (2) auszubilden,
- im Wesentlichen senkrecht Sichern von mindestens zwei Rippen (5) an den ersten Aussparungen (26) der Balkenelemente (2).

14. Verfahren nach Anspruch 13, wobei das Verfahren ferner den Schritt eines Befestigens des Auftriebselements durch eine Halterung, wie etwa ein bügelförmiges Element (30), umfasst.

15. Verfahren nach Anspruch 13 oder 14, wobei das Verfahren ferner den Schritt des Verbindens der Solarträgermodule durch ein gemeinsames Auftriebselement (4') umfasst.

## Revendications

1. Module de support pour centrale solaire flottant qui comprend
au moins deux éléments de flottabilité allongés (4a, 4b, 4c), lesdits au moins deux éléments de flottabilité allongés (4a, 4b, 4c) étant agencés sensiblement parallèlement,
au moins deux éléments de poutre (2a, 2b, 2c) reliés aux éléments de flottabilité allongés (4a, 4b, 4c), lesdits au moins deux éléments de poutre (2a, 2b, 2c) étant agencés sensiblement perpendiculairement par rapport aux éléments de flottabilité allongés (4a, 4b, 4c), lesdits au moins deux éléments de poutre (2a, 2b, 2c) ayant chacun une partie de sommet (21) provenant d'une partie angulaire (24) de l'élément de poutre (2a, 2b, 2c) respectif situé entre deux éléments de flottaison (4a, 4b, 4c) adjacents,
dans lequel les au moins deux éléments de poutre (2a, 2b, 2c) sont respectivement formés comme un élément de poutre en forme de U (27, 29) avec des brides (27), lesdits éléments de poutre (2a, 2b, 2c) respectifs ayant au moins deux seconds évidements (25) adaptés pour recevoir respectivement au moins une partie de l'élément de flottabilité (4a, 4b, 4c), et au moins deux premiers évidements (26), lesdits premiers et seconds évidements (25, 26) étant formés dans la surface des brides (27),
le module de support solaire comprend en outre au moins deux éléments de nervure allongés (5) agencés respectivement dans les premiers évidements (26) des au moins deux éléments de poutre (2a, 2b, 2c), lesdits au moins deux éléments de nervure (5) étant agencés sensiblement perpendiculairement par rapport aux au moins deux éléments de poutre (2a, 2b, 2c), dans lequel les premiers évidements (26) et les seconds évidements (25) sont agencés dans des brides opposées (27) des éléments de poutre en forme de U.

2. Module de support de centrale solaire flottant selon la revendication 1, dans lequel les brides s'étendent dans une direction agencée parallèlement à un plan (A) s'étendant à travers le centre (B) des éléments de flottabilité (4a, 4b, 4c).

3. Module de support de centrale solaire flottant selon la revendication 1 ou 2, dans lequel les au moins deux éléments de flottabilité allongés (4a, 4b, 4c), les au moins deux poutres (2a, 2b, 2c) et les au moins deux éléments de nervure allongés (5) sont respectivement agencés à distance les uns des autres.

4. Module de support de centrale solaire flottant selon la revendication 1, 2 ou 3, dans lequel ladite partie angulaire (24) comprend une première partie de poutre (22) et une seconde partie de poutre (23), ladite première et ladite seconde partie de poutre (22, 23) ayant chacune une distance angulaire (α₁, α₂) par rapport à un plan horizontal (A) s'étendant à travers le centre (B) des éléments de flottabilité (4a, 4b, 4c).

5. Module de support de centrale solaire flottant selon la revendication 4, dans lequel la distance angulaire (α₁, α₂) de ladite première et de ladite seconde partie de poutre (22, 23) est la même ou la distance angulaire (α₁) de la première partie de poutre (22) est différente de la distance angulaire (α₂) de la seconde partie de poutre (23).

6. Module de support de centrale solaire flottant selon l'une quelconque des revendications 2 à 5, dans lequel la distance angulaire (α₁, α₂) est comprise entre 10 et 45°.

7. Module de support de centrale solaire flottant selon l'une quelconque des revendications 1 à 6, dans lequel le module de support (20) a une pluralité d'éléments de nervure (5) répartis séparément dans les premiers évidements (26) sur toute la longueur des éléments de poutre (2a, 2b, 2c) respectifs.

8. Module de support de centrale solaire flottant selon l'une quelconque des revendications 1 à 7, dans lequel le second évidement (25) dans l'élément de poutre (2a, 2b, 2c) est semi-circulaire pour s'accoupler avec un élément de flottaison (4a, 4b, 4c) circulaire.

9. Module de support de centrale solaire flottant selon l'une quelconque des revendications 1 à 8, dans lequel le module de support comprend en outre un support (30) permettant de fixer l'élément de flottabilité (4a, 4b, 4c) à l'élément de poutre (2a, 2b, 2c).

10. Module de support de centrale solaire flottant selon l'une quelconque des revendications 1 à 9, dans lequel chaque élément de poutre (2a, 2b, 2c) comprend des butées (12, 13) agencées au niveau de parties non élevées de l'élément de poutre (2a, 2b, 2c) afin de faciliter le positionnement du panneau (1).

11. Centrale solaire flottante **caractérisée en ce que** ladite centrale comprend une pluralité de modules interconnectés de support de centrale solaire flottants (20) selon l'une quelconque des revendications 1 à 10, dans laquelle l'un des au moins deux éléments de flottabilité (4a, 4b, 4c) est un élément de flottabilité commun (4') relié aux éléments de poutre (2a, 2b, 2c) de deux modules de support de centrale solaire (20) agencés de manière adjacente.

12. Centrale solaire flottante selon la revendication 11, dans laquelle la centrale solaire comprend une passerelle (3).

13. Procédé d'assemblage d'un module de centrale solaire flottant selon l'une quelconque des revendications 1 à 10 sur un site distant où une centrale solaire flottante doit être installée, **caractérisé en ce que** le procédé comprend les étapes suivantes ;
- transport des différents éléments (2, 4, 5, 1) séparément jusqu'au site distant,
- liaison des au moins deux éléments de poutre (2a, 2b, 2c) et des au moins deux éléments de flottabilité allongés (4a, 4b, 4c) de manière sensiblement perpendiculaire pour former un cadre, en agençant l'élément de flottabilité (4) dans le second évidement (25) de chaque élément de poutre (2) et en fixant l'élément de flottabilité (4) à l'élément de poutre (2),
- fixation des au moins deux nervures (5) sensiblement perpendiculairement au niveau des premiers évidements (26) des éléments de poutre (2).

14. Procédé selon la revendication 13, dans lequel le procédé comprend en outre l'étape consistant à fixer l'élément de flottabilité par un support, tel qu'un élément en forme d'arc (30).

15. Procédé selon la revendication 13 ou 14, dans lequel le procédé comprend en outre l'étape consistant à relier les modules de support solaires par un élément de flottabilité commun (4').
